# EUROPÄISCHE PATENTSCHRIFT

(11) **EP 1 709 534 B1**
(45) Veröffentlichungstag und Bekanntmachung des Hinweises auf die Patenterteilung: **19.11.2008**
(21) Anmeldenummer: 05701022.5
(22) Anmeldetag: 18.01.2005
(51) Int. Cl.: G06F 9/455

(54) **AUSFÜHRUNG EINES PROGRAMMS DURCH EINE VIRTUELLE MASCHINE**
THE RUNNING OF A PROGRAM BY A VIRTUAL MACHINE
EXECUTION D'UN PROGRAMME PAR UNE MACHINE VIRTUELLE

(30) Priorität: 20.01.2004 DE 102004002903; 16.12.2004 DE 102004060548
(43) Veröffentlichungstag der Anmeldung: 11.10.2006
(73) Patentinhaber: Giesecke & Devrient GmbH, 81677 München (DE)
(72) Erfinder: PATZKE, Hagen, 81735 München (DE); RICHTER, Raimund, 81377 München (DE)
(74) Vertreter: Dendorfer, Claus
(86) Internationale Anmeldenummer: PCT/EP2005/000456
(87) Internationale Veröffentlichungsnummer: WO 2005/069136

(56) Entgegenhaltungen:
- "Core Modules" PYTHON STANDARD LIBRARY, [Online] 2003, XP002327474 EFFBOT HOMEPAGE Gefunden im Internet: URL:http://effbot.org/zone/librarybook/cor e-modules.pdf> [gefunden am 2005-05-09]
- "General Python FAQ"[Online] 2. Oktober 2003 (2003-10-02), XP002327596 PYTHON PROJECT HOMEPAGE Gefunden im Internet: URL:http://web.archive.org/web/20031002195 947/http://www.python.org/doc/faq/general. html> [gefunden am 2005-05-09]
- TIM LINDHOLM, FRANK YELLIN: "The Java Virtual Machine Specification, 2nd Edition" April 1999 (1999-04), SUN MICROSYSTEMS INC. , 901 SAN ANTONIO ROAD, PALO ALTO, CALIFORNIA 94303, U.S.A. , XP002327597 Seite 172, Abschnitt 6.2, Absatz 1 - Absatz 3

## Beschreibung

Die Erfindung betrifft das technische Gebiet der Ausführung eines Programms durch eine virtuelle Maschine, die einen Codeinterpreter aufweist. Ein bevorzugtes Einsatzgebiet der Erfindung ist die Programmausführung durch einen tragbaren Datenträger, der beispielsweise als Chipkarte in unterschiedlichen Bauformen oder als Chipmodul oder als sonstiges ressourcen beschränktes System ausgestaltet sein kann.

Tragbare Datenträger mit einer virtuellen Maschine zur Programmausführung sind als solche gut bekannt. So werden beispielsweise in Kapitel 5.10.2 des Buches "Handbuch der Chipkarten" von W. Rankl und W. Effing, Hanser Verlag, 3. Auflage, 1999, Seiten 261 - 281, Datenträger nach der *Java-Card*^{™}-Spezifikation beschrieben. Die auf diesen Datenträgern enthaltene virtuelle Maschine ist als virtuelle *Java Card* Maschine (*Java Card Virtual Machine -* JCVM) bekannt und z.B. in der Publikation *"*Java Card™ 2.2 Virtual Machine Specification", herausgegeben von der Firma Sun Microsystems, Inc., Palo Alto, Kalifornien, Juni 2002, ausführlich beschrieben. Die virtuelle *Java-Card-*Maschine führt Programme aus, die in einer kompakten maschinensprachlichen Repräsentation - dem sogenannten *Bytecode* - vorliegen.

Generell verarbeiten virtuelle Maschinen das auszuführende Programm in einer vorgegebenen Weise, die sowohl durch die Semantik der Programmbefehle als auch durch Entwurfsentscheidungen bei der Implementierung der virtuellen Maschine festgelegt ist. Hier müssen in der Regel Kompromisse zwischen den Zielen einer möglichst hohen Effizienz der Programmausführung und einer möglichst umfassenden Funktionalität der virtuellen Maschine eingegangen werden. Beispielsweise wäre es oft wünschenswert, wenn die virtuelle Maschine Daten zur Programmanalyse sammeln würde, oder wenn die virtuelle Maschine bei der Programmausführung überprüfen würde, ob Fehlerbereinigungsstücke (*patches*) ausgeführt werden sollen. Derartige an sich nützliche Funktionen benötigen jedoch Rechenleistung, die gerade bei einem tragbaren Datenträger nur sehr eingeschränkt zur Verfügung steht. Es besteht daher ein Bedürfnis nach Techniken, mit denen sich die oben genannten Ziele möglichst gut miteinander vereinbaren lassen.

US 2003/0101440 A1 offenbart ein auf einem einzigen Halbleiterchip implementiertes System, das mehrere virtuelle *Java*-Maschinen aufweist. Die virtuellen Maschinen arbeiten voneinander unabhängig in einer quasi-parallelen Betriebsweise. Durch einstellbare Speicherschutzmechanismen kann jeder virtuellen Maschine ein eigener Speicherbereich zugeordnet werden, der gegenüber den anderen virtuellen Maschinen abgeschirmt ist.

US 6,202,208 B1 beschreibt ein Verfahren zur Programmfehlerbereinigung, das zur Verwendung bei einer virtuellen Java-Maschine vorgesehen ist. Eine Datenstruktur für ein Fehlerbereinigungsstück (*patch*) kann während der Programmlaufzeit geladen werden und das von der virtuellen Maschine ausgeführte Programm verändern.

US 6,453,392 B1 zeigt eine zum Einsatz bei Großrechnern vorgesehene Technik, die den Zugriff mehrerer virtueller Maschinen auf gemeinsam genutzte Massenspeichergeräte gestattet.

Aus der Veröffentlichung "Practical Java Card bytecode compression", G. Bizzotto. G. Grimaud, RENPAR'14/ASF/SYMPA, Hamamet, Tunesien, 10 bis 13 April 2002, ist ein Verfahren zur Kompromierung von Java Bytecode für Chipkarten bekannt, das auf der Verwendung nicht belegter Bytecodesequenzen beruht. In einem zu komprimierendem Code werden bis zu 69 sich wiederholende Bytecodesequenzen ermittelt. Die ermittelten Macro-Sequenzen werden anschließend jeweils durch einen im Rahmen der Javacard 2.11 Spezifikation nicht belegten Bytecode ersetzt. An das CAP-File wird ferner eine Kompressionskomponente mit Informationen zu den Ersetzungen angehängt. Mit Hilfe der Informationen wird der Code schließlich auf der Karte in Echtzeit komprimiert. Die durch nichtbelegte Bytecodes ersetzten Macrosequenzen werden dabei in einem "Macroblob" gespeichert.

Aus der Veröffentlichung "Core Modules" PYTHON STANDARD LIBRARY,1999 bis 2003, XP-002327474 ist ein Verfahren zur bedarfsweisen Aktivierung einer Funktion zur Erfassung der Ausführungszeit für ein Programm bei Verwendung der objektorientierten Interpreterprogrammiersprache "PYTHON" entnehmbar. PYTHON basiert auf einer Zusammenstellung von Quelltextmodulen, die in einen Bytecode überführt werden, welcher durch eine virtuelle Maschine ausgeführt wird. Die Funktionsweise der Ausführungsumgebung kann dabei durch ein spezielles Modul beeinflußt werden, das die Zeiterfassungsfunktion beinhaltet. Die Zeiterfassungsfunktion wird durch alle Funktions- oder Methodenaufrufe, durch Rücksprünge oder durch Ausnahmen aktiviert. Start und Beendigung der Zeiterfassungsfunktion erfolgen mittels funktionsspezifischer Kommandos. Die Arbeitsweise des eingesetzten Interpreters selbst wird bei diesem bekannten Verfahren nicht verändert. Dem Vorteil der Ausführungszeiterfassung steht mit der Aktivierung eines zusätzlichen Moduls der Nachteil einer zusätzlichen Belastung der vorhandenen Prozessorkapazität gegenüber. Für ressourcenbeschränkte Systeme ist das bekannte Verfahren entsprechend nur bedingt geeignet.

Die Erfindung hat die Aufgabe, die Probleme des Standes der Technik zumindest zum Teil zu überwinden und eine virtuelle Maschine mit umfassender Funktionalität bereitzustellen. In bevorzugten Ausgestaltungen soll die Ausführungsgeschwindigkeit geeigneter Programme durch die erweiterten Funktionen nicht oder allenfalls geringfügig beeinträchtigt werden.

Erfindungsgemäß wird diese Aufgabe gelöst durch ein Verfahren zur Ausführung eines Programms gemäß Anspruch 1, ein Computerprogrammprodukt gemäß Anspruch 11 sowie eine Vorrichtung, insbesondere einen tragbaren Datenträger, gemäß Anspruch 12. Die abhängigen Ansprüche betreffen bevorzugte Ausführungsformen der Erfindung.

Die Erfindung beruht auf der Grundidee, die virtuelle Maschine derart auszugestalten, daß die Funktionsweise eines Codeinterpreters der virtuellen Maschine unter Steuerung des ausgeführten Programms veränderbar ist. Hierunter soll insbesondere verstanden werden, daß der Codeinterpreter ein und denselben Programmbefehl oder ein und dieselbe Befehlssequenz auf unterschiedliche Weise und/ oder mit unterschiedlichen Zusatzfunktionen auszuführen vermag, je nachdem, welche Funktionsweise gerade eingestellt ist. Die Art der Programmausführung und/ oder die von der virtuellen Maschine bereitgestellten Funktionen kann/können hierdurch besonders gut an die Erfordernisse angepaßt werden. Die Erfindung erhöht damit die Flexibilität bei der Programmausführung und schafft die technischen Grundlagen zur optimalen Nutzung der vorhandenen Ressourcen.

In einer bevorzugten Ausgestaltung ist eine erste Funktionsweise des Codeinterpreters hinsichtlich der Programmlaufzeit und/ oder des benötigten Speicherplatzes optimiert, während eine zweite Funktionsweise Funktionen zur Programmanalyse und/oder Programmoptimierung und/oder Programmfehlerbereinigung bereitstellt. Dies ermöglicht es beispielsweise, kritische Programmabschnitte in einer langsameren aber überwachten Betriebsweise auszuführen, während für weniger kritische Programmabschnitte eine möglichst effiziente Betriebsweise gewählt werden kann.

In unterschiedlichen Weiterbildungen der Erfindung kann der Codeinterpreter z.B. Funktionsweisen anbieten, in denen überprüft wird, ob Fehlerbereinigungsstücke (*patches*) ausgeführt werden sollen, oder in denen Daten über die Häufigkeit des Auftretens von Programmbefehlen und/oder Funktionsaufrufen oder Daten über die zur Programmausführung benötigte Zeit gesammelt werden. Die Erfindung ist jedoch nicht auf diese hier beispielhaft angegebenen Zusatzfunktionen eingeschränkt.

In bevorzugten Ausgestaltungen weist der Codeinterpreter Abfragebefehle auf, die in Abhängigkeit von der eingestellten Funktionsweise dafür sorgen, daß Teile des Codeinterpreters übersprungen bzw. ausgeführt werden. Alternativ oder zusätzlich kann die Funktionsweise des Codeinterpreters auch dadurch verändert werden, daß Teile des Codeinterpreters oder der gesamte Codeinterpreter in unterschiedlichen Versionen vorhanden sind, und daß je nach der eingestellten Funktionsweise eine dieser Versionen ausgeführt wird.

Vorzugsweise weist das ausführbare Programm einerseits Befehle auf, die zur eigentlichen Verarbeitung durch den Codeinterpreter als Programmbefehle vorgesehen sind, und andererseits Befehle, die als Meta- oder Steuerbefehle zumindest auch die Funktionsweise des Codeinterpreters steuern. Solche Steuerbefehle können z.B. vorbestimmte Funktionsaufrufe und/ oder reservierte Befehlscodes umfassen. In Chipkartenanwendungen kommen als Steuerbefehle insbesondere Bytecodes in Betracht, die nicht durch die Javacard-Spezifikation belegt sind, die mithin keine gültigen Bytecode-Anweisungen bilden. Die Wirkung eines Steuerbefehls kann dauerhaft sein, also bis zur nächsten Veränderung der Funktionsweise des Codeinterpreters durch einen weiteren Steuerbefehl andauern. Alternativ oder zusätzlich können Steuerbefehle vorgesehen sein, die die Funktionsweise des Codeinterpreters nur für eine vorbestimmte Zeit oder eine vorbestimmte Anzahl weiter ausgeführter Programmbefehle beeinflussen.

Die Erfindung unterscheidet sich von dem eingangs genannten Stand der Technik unter anderem dadurch, daß die in den unterschiedlichen Funktionsweisen ausgeführten Verarbeitungsvorgänge gerade nicht voneinander abgeschirmt werden sollen. In bevorzugten Ausführungsformen ist daher vorgesehen, daß der Codeinterpreter unabhängig von der eingestellten Funktionsweise ein und dasselbe Programm ausführt. Ferner greift die virtuelle Maschine vorzugsweise unabhängig von der eingestellten Funktionsweise auf ein und denselben Stapel- und/oder Haldenspeicher zu.

Gemäß einem ersten Aspekt der Erfindung weisen das Computerprogrammprodukt und/oder die Vorrichtung Programmbefehle auf, die das erfindungsgemäße Programmausführungsverfahren - vorzugsweise in Form einer geeigneten virtuellen Maschine - implementieren. Gemäß einem zweiten Aspekt der Erfindung enthalten das Computerprogrammprodukt und/oder die Vorrichtung mindestens ein Programm, das zur Ausführung durch das erfindungsgemäße Verfahren vorgesehen ist. Ein solches Programm kann insbesondere Steuerbefehle aufweisen, die zur Steuerung der Funktionsweise eines Codeinterpreters vorgesehen sind. In bevorzugten Ausgestaltungen weisen das Computerprogrammprodukt und/ oder die Vorrichtung Merkmale auf, die den hier beschriebenen und/oder den in den abhängigen Verfahrensansprüchen genannten Merkmalen entsprechen.

Das erfindungsgemäße Computerprogrammprodukt kann ein körperliches Medium sein, beispielsweise ein Halbleiterspeicher oder eine Diskette oder eine CD-ROM. Das Computerprogrammprodukt kann jedoch auch ein nicht-körperliches Medium sein, beispielsweise ein über ein Computernetzwerk übermitteltes Signal. Das Computerprogrammprodukt kann z.B. eine virtuelle Maschine und/oder ein Programm zur Ausführung durch die virtuelle Maschine enthalten.

Weitere Merkmale, Vorteile und Aufgaben der Erfindung gehen aus der folgenden genauen Beschreibung eines Ausführungsbeispiels und mehrerer Ausführungsalternativen hervor. Es wird auf die schematischen Zeichnungen verwiesen, in denen zeigen:
Fig.1 ein Blockdiagramm mit Funktionseinheiten eines tragbaren Datenträgers sowie diversen Datenstrukturen nach einem Ausführungsbeispiel der Erfindung,
Fig. 2 eine Darstellung eines Teils eines ausführbaren Programms, und
Fig. 3 ein Flußdiagramm der zur Befehlsdekodierung und -ausführung dienenden Hauptschleife nach einem Ausführungsbeispiel der Erfindung.

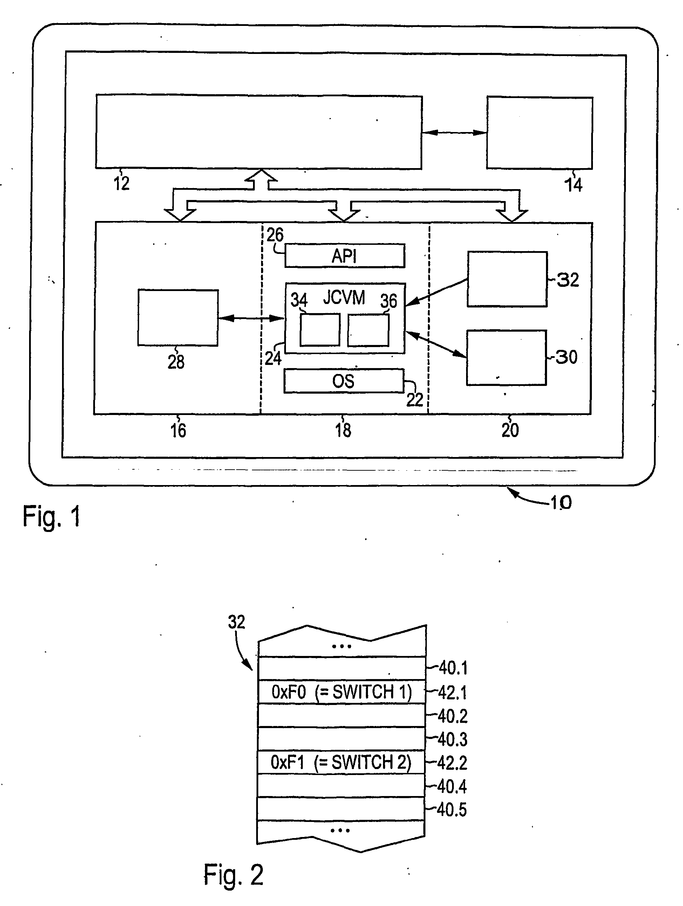

Der in Fig. 1 dargestellte Datenträger 10 ist als Chipkarte gemäß der *Java-Card*-Spezifikation ausgestaltet. Der Datenträger 10 weist auf einem einzigen Halbleiterchip einen Prozessor 12, eine Schnittstellenschaltung 14 zur kontaktlosen oder kontaktgebundenen Kommunikation und mehrere Speicherfelder auf. Im vorliegenden Ausführungsbeispiel sind als Speicherfelder ein Arbeitsspeicher 16, ein Festwertspeicher 18 und ein nicht-flüchtiger Speicher 20 vorgesehen, wobei der Arbeitsspeicher 16 als RAM, der Festwertspeicher 18 als maskenprogrammiertes ROM und der nicht-flüchtige Speicher 20 als elektrisch lösch- und programmierbares EEPROM ausgestaltet sind.

Im Festwertspeicher 18 sind ein Betriebssystem 22, eine virtuelle Maschine 24 und eine Klassenbibliothek 26 enthalten. Das Betriebssystem 22 stellt in an sich bekannter Weise eine Vielzahl von hardwarenahen Funktionen und Diensten bereit. Die virtuelle Maschine 24 ist im vorliegenden Ausführungsbeispiel als JCVM (*Java Card Virtual Machine*) ausgestaltet. Die Klassenbibliothek 26 enthält eine Reihe vordefinierter Anwendungsprogrammierschnittstellen, wie sie in der Publikation *"*Java Card™ 2.2 Application Programming Interface", herausgegeben von der Firma Sun Microsystems, Inc., Palo Alto, Kalifornien, Juni 2002, beschrieben sind. In Ausführungsalternativen ist die virtuelle Maschine für die *Common Language Infrastructure* (CLI) des .NET-Systems der Firma Microsoft® vorgesehen.

Die virtuelle Maschine 24 hat Zugriff auf einen im Arbeitsspeicher 16 angelegten Stapelspeicher (*stack*) 28 und auf einen im nicht-flüchtigen Speicher 20 angelegten Haldenspeicher (*heap*) 30. Während des Betriebs des Datenträgers 10 führt die virtuelle Maschine 24 ein im nicht-flüchtigen Speicher 20 befindliches Programm 32 aus. Hierbei sorgt ein Codeinterpreter 34 der virtuellen Maschine 24 für die eigentliche Programmausführung gemäß einer von mehreren unter Steuerung des Programms 32 einstellbaren Funktionsweisen des Codeinterpreters 34. Ein auch als *Security Manager* bezeichnetes Sicherheitsmodul 36 läuft quasi-parallel zum Codeinterpreter 34 und überwacht die Einhaltung von Feldgrenzen sowie von Grenzen im Stapel- und Haldenspeicher 28, 30.

Wie in Fig. 2 veranschaulicht, liegt das Programm 32 als Folge von Befehlen vor, und zwar Programmbefehlen 40.1, 40.2, ... und Steuerbefehlen 42.1, 42.2, die im folgenden zusammenfassend mit 40.x bzw. 42.x bezeichnet werden. Die Programmbefehle 40.x sind gültige *Bytecode*-Anweisungen für die virtuelle Maschine 24 gemäß der eingangs bereits zitierten *"Java Card*^{™} *2.2 Virtual Machine Specification*". Die Steuerbefehle 42.x enthalten im vorliegenden Ausführungsbeispiel reservierte Befehlscodes. Damit sind die Steuerbefehle 42.x keine gültigen *Bytecode*-Anweisungen, was sie von den Programmbefehlen 40.x unterscheidet. In Ausführungsalternativen können als Steuerbefehle 42.x vorbestimmte Funktionsaufrufe vorgesehen sein.

Bei der Ausführung des Programms 32 arbeitet der Codeinterpreter 34 die Programmbefehle 40.x gemäß ihrer durch das Programm 32 definierten Ausführungsreihenfolge ab. Die hierbei im einzelnen vom Codeinterpreter 34 ausgeführten Schritte hängen von der jeweils eingestellten Funktionsweise des Codeinterpreters 34 ab. Die Funktionsweiseneinstellung wird durch die Steuerbefehle 42.x des Programms 32 gesteuert.

Im vorliegenden Ausführungsbeispiel bewirkt jeder Steuerbefehl 42.x die Umschaltung auf eine durch den Steuerbefehl 42.x angegebene Funktionsweise; so kann z.B. der Codeinterpreter 34 vom Steuerbefehl 42.1 auf eine erste Funktionsweise und vom Steuerbefehl 42.2 auf eine zweite Funktionsweise geschaltet werden. Diese Einstellung ist so lange gültig, bis der nächste Steuerbefehl 42.x ausgeführt wird. In anderen Ausgestaltungen können alternativ oder zusätzlich Steuerbefehle 42.x vorgesehen sein, die nur eine vorübergehende Umschaltung der Funktionsweise - z.B. für eine vorbestimmte Anzahl von Programmbefehlen 40.x oder für eine vorbestimmte Zeitdauer - bewirken.

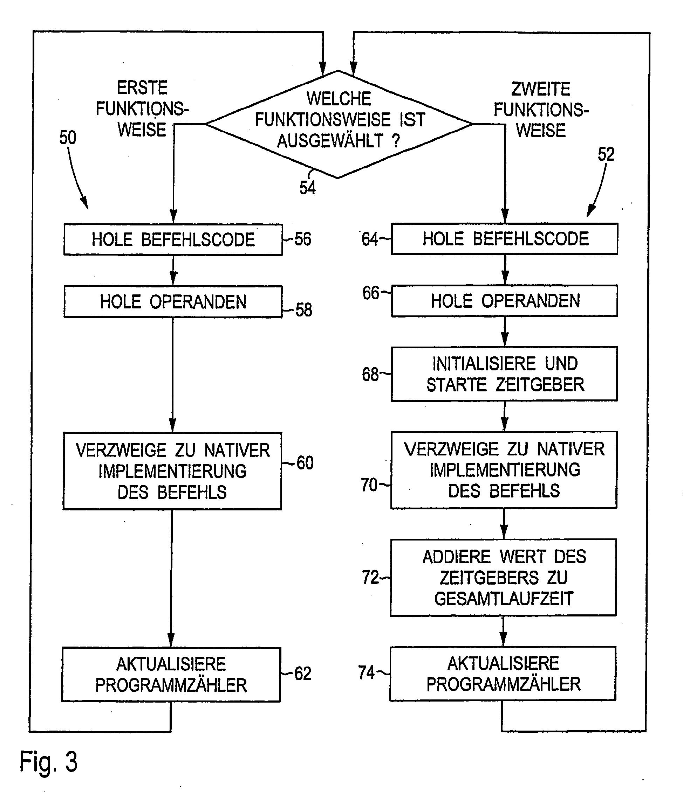

Fig. 3 zeigt die Hauptschleife einer virtuellen Maschine 24 in einem besonders einfachen Ausführungsbeispiel. Der Codeinterpreter 34 weist hier zwei Funktionsweisen 50, 52 auf, zwischen denen durch Steuerbefehle 42.x umgeschaltet werden kann. In der ersten Funktionsweise 50 wird das Programm 32 möglichst rasch und speicherplatzsparend ausgeführt. In der zweiten Funktionsweise 52 wird dagegen die Laufzeit der ausgeführten Programmbefehle 40.x ermittelt und aufsummiert. Hierdurch läßt sich ein Zeitprofil des Programmablaufs bilden, das z.B. zur Analyse und späteren Optimierung des Programms 32 verwendet werden kann.

Die Hauptschleife gemäß Fig. 3 beginnt mit einer Abfrage 54, die in Abhängigkeit von der aktuellen Funktionsweise 50, 52 des Codeinterpreters 34 entweder zu Schritt 56 oder zu Schritt 64 verzweigt. In der ersten Funktionsweise 50 werden die Schritte 56 - 62 ausgeführt, die - bis auf die Behandlung von Steuerbefehlen 42.x - den üblicherweise in einer Codeinterpreter-Hauptschleife nach dem Stand der Technik ausgeführten Schritten entsprechen. Genauer wird in Schritt 56 zunächst der Befehlscode (*opcode*) des nächsten auszuführenden Befehls aus dem nicht-flüchtigen Speicher 20 geholt. Falls der Befehl Operanden enthält, werden diese in Schritt 58 eingelesen.

Schritt 60 betrifft die eigentliche Befehlsausführung. Falls es sich bei dem aktuellen Befehl in Schritt 60 um einen Steuerbefehl 42.x handelt, so wird die Funktionsweise des Codeinterpreters 34 entsprechend diesem Steuerbefehl 42.x neu eingestellt, und der Ablauf wird mit Schritt 62 fortgesetzt. Falls es sich bei dem aktuellen Befehl jedoch um einen Programmbefehl 40.x handelt, wird im vorliegenden Ausführungsbeispiel eine native Implementierung dieses Befehls in der Maschinensprache des Prozessors 12 angesprungen und ausgeführt. Dieser Vorgang wird auch als "*opcode dispatch*" bezeichnet. Es sind auch Ausgestaltungen denkbar, bei denen die Verzweigung in Schritt 60 nicht auf nativen, sondern zumindest zum Teil wieder auf interpretierten Code verweist.

In Ausgestaltungen, bei denen die Steuerbefehle 42.x vorbestimmte Funktionsaufrufe - und damit gültige *Bytecode*-Anweisungen - sind, braucht in Schritt 60 nicht zwischen Programmbefehlen 40.x und Steuerbefehlen 42.x unterschieden zu werden. Hier kann die Funktionsweise 50, 52 des Codeinterpreters 34 vielmehr durch die ausgeführte Funktion - in der Regel eine Systemfunktion - eingestellt werden.

Nach der Befehlsausführung wird in Schritt 62 der Programmzähler der virtuellen Maschine 24 aktualisiert, so daß er auf den Beginn des nächsten auszuführenden Befehls im Programm 32 zeigt. Falls es sich bei dem gerade in Schritt 60 ausgeführten Befehl um einen Sprungbefehl handelte, wird der Programmzähler in Schritt 62 auf das Sprungziel gesetzt. Andernfalls wird der Programmzähler um so viele Bytes inkrementiert, wie der ausgeführte Befehl - einschließlich eventueller Operanden - lang war. Der Schleifendurchlauf gemäß der ersten Funktionsweise 50 ist damit beendet.

Wenn die Abfrage 54 ergibt, daß die zweite Funktionsweise 52 des Codeinterpreters 34 eingestellt ist, werden die Schritte 64 - 74 ausgeführt. Hierbei entsprechen die Schritte 64, 66, 70 und 74 den bereits beschriebenen Schritten 56, 58, 60 und 62 der ersten Funktionsweise 50. In den Schritten 68 und 72 wird ferner die Zusatzfunktion gemäß der zweiten Funktionsweise 52 ausgeführt. Genauer wird in Schritt 68 ein Zeitgeber des Datenträgers 10 auf Null gesetzt und gestartet. In Schritt 72, also nach der Befehlsausführung in Schritt 70, wird der Wert des Zeitgebers ausgelesen und zu einem Zähler für die Gesamtlaufzeit der überwachten Programmabschnitte addiert.

Bei der Ausführung der Hauptschleife gemäß Fig. 3 nutzt die virtuelle Maschine 24 in beiden Funktionsweisen 50, 52 dieselben Prozessorregister, denselben Programmzähler und denselben Stapel- und Haldenspeicher 28, 30. Eine Umschaltung zwischen den Funktionsweisen 50, 52 ist daher im vorliegenden Ausführungsbeispiel innerhalb des Programms 32 jederzeit möglich, ohne daß die Programmbefehle 40.x speziell für diese Möglichkeit ausgelegt sein müßten. Mit anderen Worten können im vorliegenden Ausführungsbeispiel in ein für eine virtuelle Maschine nach dem Stand der Technik ausgelegtes Programm 32, das ausschließlich Programmbefehle 40.x aufweist, problemlos Steuerbefehle 42.x eingefügt werden, ohne daß das Programm 32 deswegen umgeschrieben werden müßte. Hierdurch lassen sich die durch die Erfindung bereitgestellten Zusatzfunktionen mit geringem Aufwand nutzen.

In dem Ausführungsbeispiel gemäß Fig. 3 ist der Codeinterpreter 34 in der virtuellen Maschine 24 mehrfach, nämlich in zwei vollständigen und voneinander getrennten Versionen, enthalten. Die erste Version wird in der ersten Funktionsweise 50 ausgeführt, während die Abfrage 54 in der zweiten Funktionsweise 52 zur zweiten Version des Codeinterpreters 34 verzweigt.

In Ausführungsalternativen kann jedoch auch vorgesehen sein, alle Funktionsweisen und Zusatzfunktionen in einem einzigen Ausführungsstrang des Codeinterpreters 34 zu kombinieren. In solchen Ausgestaltungen werden einzelne Teile des Codeinterpreters 34 in Abhängigkeit von der eingestellten Funktionsweise ausgeführt bzw. übersprungen. So können z.B. in einer Abwandlung von Fig. 3 nur die Schritte 64 - 74 vorgesehen sein, wobei die Schritte 68 und 72 in der ersten Funktionsweise 50 übersprungen, in der zweiten Funktionsweise 52 dagegen ausgeführt werden.

Es versteht sich, daß statt der einfachen Ausgestaltung gemäß Fig. 3 diverse andere Funktionsweisen vorgesehen sein können, die teils komplexe Zusatzfunktionen ausführen. Beispielsweise kann in manchen Ausführungsformen eine Funktionsweise vorgesehen sein, in deren Hauptschleife laufend überprüft wird, ob für den jeweils aktuellen Programmzählerstand ein Fehlerbereinigungsstück (*patch*) ausgeführt werden soll. Auf diese Weise lassen sich Programmfehler insbesondere in langen Methoden bereinigen, ohne daß ein ständiger Leistungsverlust bei der Ausführung des restlichen Programms auftreten würde.

Ferner können diverse statistische Daten zur Programmanalyse und Programmoptimierung gesammelt werden. Neben dem Beispiel von Fig. 3 kann z.B. die Aufrufhäufigkeit einzelner Programmbefehle 40.x oder Befehlsgruppen oder die Häufigkeit bestimmter Funktionsaufrufe ermittelt werden.

Schließlich können Funktionsweisen vorgesehen sein, in denen einzelne Programmbefehle 40.x auf unterschiedliche Art ausgeführt werden. Auch solche Funktionsweisen können zur Fehlerbereinigung genutzt werden, oder sie können dazu dienen, die virtuelle Maschine 24 an unterschiedliche Versionen des auszuführenden *Bytecode* anzupassen. So kann z.B. ein zur Ausführung von älteren Programmen dienender Kompatibilitätsmodus und ein aktueller Modus gemäß der neuesten *Java-Card*-Spezifikation vorgesehen sein.

## Patentansprüche

1. Verfahren zur Ausführung eines Programms (32) durch eine virtuelle Maschine (24), die einen Codeinterpreter (34) aufweist, **dadurch gekennzeichnet, daß** zumindest Teile des Codeinterpreters (34) in mehreren Versionen mit unterschiedlicher Funktionalität vorhanden sind, und daß die Funktionsweise (50, 52) des Codeinterpreters (34) unter Steuerung des ausgeführten Programms derart verändert wird, daß eine dieser Versionen zur Ausführung bestimmt wird, wobei in unterschiedlichen Funktionsweisen (50, 52) des Codeinterpreters (34) mindestens ein Programmbefehl (40.x) des Programms (32) auf unterschiedliche Weise und/ oder mit unterschiedlichen Zusatzfunktionen ausgeführt wird.

2. Verfahren nach Anspruch 1, **dadurch gekennzeichnet, daß** der Codeinterpreter (34) mindestens eine erste und eine zweite Funktionsweise (50, 52) aufweist, wobei die erste Funktionsweise (50) hinsichtlich der Programmlaufzeit und/ oder des benötigten Speicherplatzes optimiert ist und die zweite Funktionsweise (52) Zusatzfunktionen zur Programmanalyse und/ oder Programmoptimierung und/ oder Programmfehlerbereinigung bereitstellt.

3. Verfahren nach Anspruch 2, **dadurch gekennzeichnet, daß** die zweite Funktionsweise (52) zumindest eine der folgenden Funktionen bereitstellt:
- Überprüfen, ob ein Fehlerbereinigungsstück (*patch*) ausgeführt werden soll,
- Ausführen mindestens eines Programmbefehls (40.x) auf eine im Vergleich zu der ersten Funktionsweise (50) modifizierte Art,
- Sammeln von Daten über die Häufigkeit des Auftretens bestimmter Programmbefehle (40.x) und/ oder Funktionsaufrufe, und
- Sammeln von Daten, die die zur Ausführung von Programmbefehlen (40.x) und/oder Funktionsaufrufen benötigte Zeit betreffen.

4. Verfahren nach einem der Ansprüche 1 bis 3, **dadurch gekennzeichnet, daß** die Funktionsweise (50, 52) des Codeinterpreters (34) **dadurch** verändert wird, daß Teile des Codeinterpreters (34) übersprungen bzw. ausgeführt werden.

5. Verfahren nach einem der Ansprüche 1 bis 4, **dadurch gekennzeichnet, daß** das Programm (32) Programmbefehle (40.x) und Steuerbefehle (42.x) aufweist, wobei die Programmbefehle (40.x) zur Ausführung durch den Codeinterpreter (34) vorgesehen sind und die Steuerbefehle (42.x) zumindest auch die Funktionsweise (50, 52) des Codeinterpreters (34) steuern.

6. Verfahren nach Anspruch 5, **dadurch gekennzeichnet, daß** mindestens ein Funktionsaufruf und/ oder mindestens ein reservierter Befehlscode als Steuerbefehl (42.x) dient/dienen.

7. Verfahren nach Anspruch 5, **dadurch gekennzeichnet, daß** die Funktionsweise (50, 52) des Codeinterpreters (34) nach Ausführung eines Steuerbefehls (42.x) dauerhaft oder für eine vorbestimmte Zeit oder für eine vorbestimmte Anzahl von Programmbefehlen (40.x) verändert wird.

8. Verfahren nach einem der Ansprüche 1 bis 7, **dadurch gekennzeichnet, daß** der Codeinterpreter (34) dazu eingerichtet ist, unabhängig von der eingestellten Funktionsweise (50, 52) ein und dasselbe Programm (32) auszuführen.

9. Verfahren nach einem der Ansprüche 1 bis 8, **dadurch gekennzeichnet, daß** die virtuelle Maschine (24) dazu eingerichtet ist, unabhängig von der eingestellten Funktionsweise (50, 52) des Codeinterpreters (34) auf ein und denselben Stapel- und/ oder Haldenspeicher (28, 30) zuzugreifen.

10. Verfahren nach einem der Ansprüche 1 bis 9, **dadurch gekennzeichnet, daß** die virtuelle Maschine (24) eine virtuelle *Java-Card-*Maschine ist.

11. Computerprogrammprodukt, das Befehle aufweist, die einen Prozessor (12) zur Ausführung eines Verfahrens nach einem der Ansprüche 1 bis 10 veranlassen.

12. Vorrichtung, insbesondere tragbarer Datenträger (10), mit einem Prozessor (12) und mindestens einem Speicher (16,18, 20), wobei der Speicher (16, 18, 20) Befehle enthält, die den Prozessor (12) zur Ausführung eines Verfahrens nach einem der Ansprüche 1 bis 10 veranlassen.

## Claims

1. Method for executing a program (32) by means of a virtual machine (24) having a code interpreter (34), **characterised in that** at least parts of the code interpreter (34) are present in several versions with different functionalities, and **in that** the mode of operation (50, 52) of the code interpreter (34) is changed, controlled by the executed program, such that one of these versions is designated for execution, wherein, in different modes of operation (50, 52) of the code interpreter (34), at least one program command (40.x) of the program (32) is executed in a different manner and/or with different additional functions.

2. Method according to claim 1, **characterised in that** the code interpreter (34) has at least a first and a second mode of operation (50, 52), wherein the first mode of operation (50) is optimised with regard to the program run time and/or the storage space required, and the second mode of operation (52) provides additional functions for program analysis and/or program optimisation and/ or program error correction.

3. Method according to claim 2, **characterised in that** the second mode of operation (52) provides at least one of the following functions:
- checking whether an error correction patch is to be executed,
- executing at least one program command (40.x) in a way modified in comparison to the first mode of operation (50),
- collecting data on the frequency of occurrence of certain program commands (40.x) and/or function calls, and
- collecting data relating to the time required for executing program commands (40.x) and/ or function calls.

4. Method according to any one of claims 1 to 3, **characterised in that** the mode of operation (50, 52) of the code interpreter (34) is changed by parts of the code interpreter (34) being skipped or executed respectively.

5. Method according to any one of claims 1 to 4, **characterised in that** the program (32) has program commands (40.x) and control commands (42.x), wherein the program commands (40.x) are intended for execution by the code interpreter (34) and the control commands (42.x) control at least also the mode of operation (50, 52) of the code interpreter (34).

6. Method according to claim 5, **characterised in that** at least one function call and/ or at least one reserved command code serve(s) as control command (42.x).

7. Method according to claim 5, **characterised in that** the mode of operation (50, 52) of the code interpreter (34), after the execution of a control command (42.x), is changed permanently or for a predetermined time or for a predetermined number of program commands (40.x).

8. Method according to any one of claims 1 to 7, **characterised in that** the code interpreter (34) is set up for executing one and the same program (32) independently of the set mode of operation (50, 52).

9. Method according to any one of claims 1 to 8, **characterised in that** the virtual machine (24) is set up for accessing one and the same stack and/ or heap memory (28, 30) independently of the set mode of operation (50, 52) of the code interpreter (34).

10. Method according to any one of claims 1 to 9, **characterised in that** the virtual machine (24) is a Java Card Virtual Machine.

11. Computer program product having commands causing a processor (12) to execute a method according to any one of claims 1 to 10.

12. Device, in particular portable data carrier (10) comprising a processor (12) and at least one memory (16, 18, 20), wherein the memory (16, 18, 20) contains commands causing the processor (12) to execute a method according to any one of claims 1 to 10.

## Revendications

1. Procédé pour l'exécution d'un programme (32) par une machine virtuelle (24) comportant un interpréteur de code (34), **caractérisé en ce qu'**au moins des parties de l'interpréteur de code (34) sont présentes avec une fonctionnalité différente dans plusieurs versions, et **en ce que** le fonctionnement (50, 52) de l'interpréteur de code (34) est modifié par commande du programme exécuté de manière à déterminer une de ces versions pour l'exécution, au moins une instruction de programme (40.x) du programme (32) étant, lors de fonctionnements différents (50, 52) de l'interpréteur de code (34), exécutée de manière différente et/ou avec des fonctions additionnelles différentes.

2. Procédé selon la revendication 1, **caractérisé en ce que** l'interpréteur de code (34) présente au moins un premier et un deuxième fonctionnement (50, 52), le premier fonctionnement (50) étant optimisé relativement à la durée d'exécution de programme et/ou de l'espace mémoire exigé, et le deuxième fonctionnement (52) chargeant des fonctions additionnelles pour l'analyse de programme et/ou l'optimisation de programme et/ou l'élimination des erreurs de programme.

3. Procédé selon la revendication 2, **caractérisé en ce que** le deuxième fonctionnement (52) charge au moins une des fonctions suivantes :
- vérification si une rustine d'élimination des erreurs (*patch*) doit être exécutée,
- exécution d'au moins une instruction de programme (40.x) de manière modifiée par rapport au premier fonctionnement (50),
- collecte de données sur la fréquence d'apparition d'instructions de programme (40.x) et/ou d'appels de fonction définis, et
- collecte de données concernant le temps exigé pour l'exécution d'instructions de programme (40.x) et/ou d'appels de fonction.

4. Procédé selon l'une des revendications 1 à 3, **caractérisé en ce que** le fonctionnement (50, 52) de l'interpréteur de code (34) est modifié de manière que des parties de l'interpréteur de code (34) soient sautées ou bien exécutées.

5. Procédé selon l'une des revendications 1 à 4, **caractérisé en ce que** le programme (32) comporte des instructions de programme (40.x) et des instructions de commande (42.x), les instructions de programme (40.x) étant prévues pour être exécutées par l'interpréteur de code (34) et les instructions de commande (42.x) commandant au moins aussi le fonctionnement (50, 52) de l'interpréteur de code (34).

6. Procédé selon la revendication 5, **caractérisé en ce qu'**au moins un appel de fonction et/ou au moins un code d'erreur réservé sert/servent d'instruction de commande (42.x).

7. Procédé selon la revendication 5, **caractérisé en ce que** le fonctionnement (50, 52) de l'interpréteur de code (34) est modifié après exécution d'une instruction de commande (42.x), durablement ou pendant un temps défini, ou pendant un nombre défini d'instructions de programme (40.x).

8. Procédé selon l'une des revendications 1 à 7, **caractérisé en ce que** l'interpréteur de code (34) est réglé pour exécuter un seul et même programme (32) indépendamment du fonctionnement réglé (50, 52).

9. Procédé selon l'une des revendications 1 à 8, **caractérisé en ce que** la machine virtuelle (24) est réglée pour accéder à un(e) seul(e) et même pile et/ou tas, indépendamment du fonctionnement réglé (50, 52) pour l'interpréteur de code (34).

10. Procédé selon l'une des revendications 1 à 9, **caractérisé en ce que** la machine virtuelle (24) est une machine virtuelle *Java Card.*

11. Produit de programme informatique comportant des instructions incitant un processeur (12) à exécuter un procédé selon l'une des revendications 1 à 10.

12. Dispositif, en particulier support de données portable (10), avec un processeur (12) et au moins une mémoire (16, 18, 20), ladite mémoire (16, 18, 20) contenant des instructions incitant le processeur (12) à exécuter un procédé selon l'une des revendications 1 à 10.
